# EUROPEAN PATENT APPLICATION

(11) **EP 3 240 233 A1**
(43) Date of publication of application: **01.11.2017**
(21) Application number: 15871670.4
(22) Date of filing: 14.07.2015
(51) Int. Cl.: H04L 12/24

(54) **POWER FAIL SAFEGUARD METHOD, DEVICE AND SYSTEM THEREOF**

(30) Priority: 25.12.2014 CN 201410826767
(71) Applicant: ZTE Corporation, Shenzhen, Guangdong 518057 (CN)
(72) Inventor: YANG, Fuzhi, Shenzhen Guangdong 518057 (CN)
(74) Representative: Potter Clarkson LLP
(86) International application number: PCT/CN2015/083979
(87) International publication number: WO 2016/101596

(57) **Abstract**

A power fail protection method and device, the method including: detecting whether there is a service exception in a service-carrying single board; detecting whether an under-voltage warning exists in a power panel; detecting whether a current voltage of the power panel is normal; and restarting the single board in the case that there is a service exception in the single board, the under-voltage warning exists in the power panel and the current voltage of the power panel is normal, in order to reconfigure the single board. The technical solution described above solves the problem of constant service interruptions due to the fact that a power supply module powering a central processing unit of the service-carrying single board does not turn off the output, while output from a power supply module for service chips is turned off, and also, constant interruptions of the single board service can be avoided.

## Description

### TECHNICAL FIELD

The present disclosure relates to power fail protection techniques, and particularly, relates to a power fail protection method, device and system thereof.

### BACKGROUND

Typically, a terminal communication device may comprise two or more single boards. At present, single boards are typically powered by two or more power panels, each of the power panels having different output off thresholds from each other. When power-fail occurs, batteries will be used to supply power instead of the power panels. Due to limited capacity of batteries, output voltage of the batteries will gradually fall to a point that the equipment cannot work. When the output voltage falls to a certain range, some internal power modules of the single boards will stop outputting while the others will still work normally.

In the above case, if power supply returns normal, the service carrying single board cannot be restarted and the service chip will lose its configurations and cannot be reconfigured, which will result in interruptions of service, because the power supply module for powering a CPU of the service carrying single board has not turn off while the power supply module for a service chip has turn off.

In the related art, there is not any effective solution to solve the problems of service interruptions due to the fact that a power supply module powering a central processing unit of the service-carrying single board does not turn off the output, while output from a power supply module for a service chip is turned off.

### SUMMARY

The present disclosure provides a power fail protection method, device and system thereof, so as to at least solve the problems of service interruptions due to the fact that a power supply module powering a central processing unit of the service-carrying single board does not turn off the output, while output from a power supply module for a service chip is turned off.

To solve the above problem, the following solution is applied.

A power fail protection method is provided, the method comprising:
detecting whether there is a service exception in a service-carrying single board;
detecting whether an under-voltage warning exists in a power panel;
detecting whether a current voltage of the power panel is normal; and
restarting the single board in the case that there is a service exception in the single board, the under-voltage warning exists in the power panel and the current voltage of the power panel is normal, in order to reconfigure the single board.

Optionally, the detection detecting whether there is a service exception in a service-carrying single board comprises:
determining whether there is a service exception in the single board by detecting whether a service chip register value of the single board is abnormal in a periodic cycle way.

Optionally, detecting whether an under-voltage warning exists in a power panel comprises:
determining whether there is an under-voltage warning exists in the power panel by detecting whether an under-voltage indication signal exists in the power panel in a periodic cycle way.

A power fail protection device is provided, the power fail protection device comprising a first detection module, a second detection module, a third detection module and a restart module, wherein:
the first detection module is configured to detect whether there is a service exception in a service-carrying single board;
the second detection module is configured to detect whether an under-voltage warning exists in a power panel;
the third detection module is configured to detect whether a current voltage of the power panel is normal; and
the restart module is configured to restart the single board in case that there is a service exception in the single board, an under-voltage warning exists in the power panel and the current voltage of the power panel is normal, in order to reconfigure the single board.

Optionally, the first detection module is configured to detect whether there is a service exception in a service-carrying single board by way of:
determining whether there is a service exception in the single board by detecting whether a service chip register value of the single board is abnormal in a periodic cycle way.

Optionally, the second detection module is configured to detect whether an under-voltage warning exists in a power panel by way of:
determining whether there is an under-voltage warning exists in the power panel by detecting whether an under-voltage indication signal exists in the power panel in a periodic cycle way.

Optionally, the first detection module is further configured to notify the second detection module to detect whether an under-voltage warning exists in the power panel when it is detected that there is a service exception in a service-carrying single board;
the second detection module is further configured to, in response to the notification from the first detection module, detect whether an under-voltage warning exists in the power panel, and notify the third detection module to detect whether the current voltage of the power panel is normal when it is detected that an under-voltage warning exists in the power panel; and
the third detection module is further configured to, in response to the notification from the second detection module, detect whether the current voltage of the power panel is normal.

A single board is provided, the single board comprising the above-mentioned power fail protection device.

A computer program is provided, comprising program instructions that cause the computer to perform a power fail protection method as discussed above when the program instructions are executed by a computer.

A carrier carrying the above mentioned computer program.

A power fail protection method, comprising: detecting whether there is a service exception in a service-carrying single board; detecting whether an under-voltage warning exists in a power panel; detecting whether the current voltage of the power panel is normal; and restarting the single board in case that there is a service exception in the single board, an under-voltage warning exists in the power panel and the current voltage of the power panel is normal, in order to reconfigure the single board.

Optionally, detecting whether there is a service exception in a service-carrying single board comprises: determining whether there is a service exception in the single board by detecting whether a service chip register value of the single board is abnormal in a periodic cycle way.

Optionally, detecting whether an under-voltage warning exists in a power panel comprises: determining whether there is an under-voltage warning exists in the power panel by detecting whether an under-voltage indication signal exists in the power panel in a periodic cycle way.

Optionally, detecting whether an under-voltage warning exists in the power panel; and detecting whether a current voltage of the power panel is normal comprising: detecting whether an under-voltage warning exists in the power panel when it is detected that there is a service exception in a service-carrying single board; and detecting whether the current voltage of the power panel is normal when it is detected that an under-voltage warning exists in the power panel.

A power fail protection device comprising a first detection module configured to detect whether there is a service exception in a service-carrying single board; a second detection module configured to detect whether an under-voltage warning exists in a power panel; a third detection module configured to detect whether a current voltage of the power panel is normal; and a restart module configured to restart the single board in case that there is a service exception in the single board, an under-voltage warning exists in the power panel and the current voltage of the power panel is normal, in order to reconfigure the single board.

Optionally, the first detection module is further configured to determine whether there is a service exception in the single board by detecting whether a service chip register value of the single board is abnormal in a periodic cycle way.

Optionally, the second detection module is further configured to determine whether there is an under-voltage warning exists in the power panel by detecting whether an under-voltage indication signal exists in the power panel in a periodic cycle way.

Optionally, the second detection module is further configured to detect whether an under-voltage warning exists in the power panel when it is detected that there is a service exception in the single board; and the third detection module is further configured to detect whether the current voltage of the power panel is normal when it is detected that there is a service exception in a service-carrying single board; and detecting whether the current voltage of the power panel is normal when it is detected that an under-voltage warning exists in the power panel.

According to another aspect of the present disclosure, a power fail system is provided, which is disposed on a single board, the single board comprising: a first detection module configured to detect whether there is a service exception in a service-carrying single board; a second detection module configured to detect whether an under-voltage warning exists in a power panel; a third detection module configured to detect whether a current voltage of the power panel is normal; and a restart module configured to restart the single board in case that there is a service exception in the single board, an under-voltage warning exists in the power panel and the current voltage of the power panel is normal, in order to reconfigure the single board.

According to another aspect of the present disclosure, a power fail system is provided, which is disposed on a plurality of single boards, wherein a first single board of the plurality of single boards comprises: a first detection module configured to detect whether there is a service exception in the first single board which is carrying service; and a restart module configured to restart the first single board in case that there is a service exception in the first single board, an under-voltage warning exists in the power panel and a current voltage of the power panel is normal, in order to reconfigure the single board; and wherein a second single board of the plurality of single boards comprises: a second detection module configured to detect whether an under-voltage warning exists in the power panel; a third detection module configured to detect whether the current voltage of the power panel is normal.

With the technical solution disclosed by the present disclosure, by detecting whether there is a service exception in a service-carrying single board; detecting whether an under-voltage warning exists in a power panel; detecting whether the current voltage of the power panel is normal; and restarting the single board in case that there is a service exception in the single board, an under-voltage warning exists in the power panel and the current voltage of the power panel is normal, in order to reconfigure the single board, the problem of service interruptions due to the fact that a power supply module powering a central processing unit of the service-carrying single board does not turn off the output, while output from a power supply module for service chips is turned off, can be solved, and also, constant interruptions of the single board service can be avoided.

### BRIEF DESCRIPTION OF THE DRAWINGS

The drawings herein are provided to help those skilled in the art to fully understand the present disclosure, which is a part of the specification of the present disclosure. Illustrative embodiments of the present disclosure and the description thereof are only intended to be illustrative of the present disclosure, and should not be construed as any limitation to the present disclosure. In the drawings:
Figure 1 illustrates a flow chart of a power fail protection method according to an embodiment of the present disclosure;
Figure 2 illustrates a structural diagram of a power fail protection device according to an embodiment of the present disclosure;
Figure 3 illustrates a hardware implementation diagram of service exception detection according to an alternative embodiment of the present disclosure;
Figure 4 illustrates a software implementation diagram of service exception detection according to an alternative embodiment of the present disclosure;
Figure 5 illustrates another software implementation diagram of service exception detection according to an alternative embodiment of the present disclosure;
Figure 6 illustrates detection operations performed by a service exception detection unit according to an alternative embodiment of the present disclosure; and
Figure 7 illustrates a flow chart of under-voltage exception detection according to an alternative embodiment of the present disclosure.

### DETAILED DESCRIPTION

Hereinafter, the present disclosure will be described in details with reference to the drawings. It should be noted that the embodiments and the features in those embodiments in the present disclosure may be combined with each other as long as they do not conflict with each other.

It should be noted that the embodiments and the features in those embodiments in the present disclosure may be combined with each other as long as they do not conflict with each other. Although a logical sequence is shown in the flowchart, in some cases the steps shown or described in the present disclosure may be performed in an order different from that is described herein. The present disclosure will be described in details below with reference to the drawings.

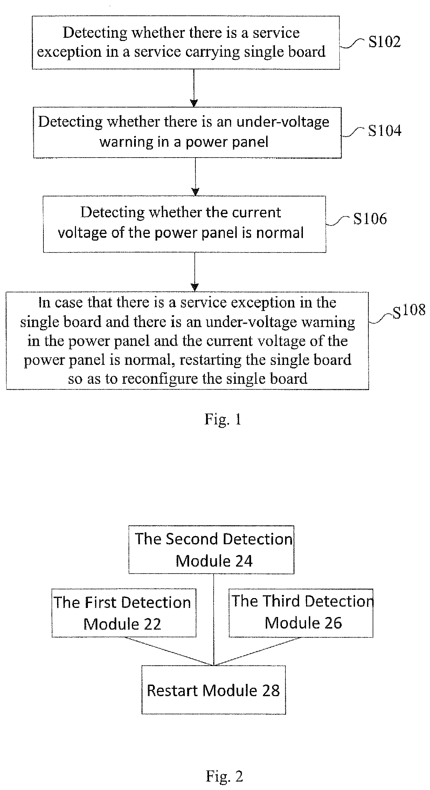

A power fail protection method is provided in an embodiment. Figure 1 illustrates a flow chart of a power fail protection method according to the present embodiment of the disclosure. As shown in Figure 1, the method comprising:
Step S102, detecting whether there is a service exception in a service-carrying single board;
Step S104, detecting whether an under-voltage warning exists in a power panel;
Step S106, detecting whether a current voltage of the power panel is normal; and
Step S108, restarting the single board in case that there is a service exception in the single board, an under-voltage warning exists in the power panel and the current voltage of the power panel is normal, in order to reconfigure the single board.

By performing the above steps, that is, detecting a service exception in a single board, an under-voltage warning in a power panel and the current voltage of the power panel, determining whether to restart the single board and reconfigure the single board, the problem of the single board losing its configuration data and thus cannot be reconfigured that is caused due to the single board cannot be restarted in the related art can be solved. With the above steps, the problem of constant service interruptions due to the fact that a power supply module powering a central processing unit of the service-carrying single board does not turn off the output, while output from a power supply module for a service chip (or chips) is turned off, can be solved, and also, constant interruptions of the single board service can be avoided.

It should be noted that the above steps S102 to S106 may be performed in a different sequence and should not be limited to the above mentioned sequence.

Optionally, the step of detecting whether there is a service exception in a single board may comprise: detecting a service chip register value. For example, it is determined that there is a service exception in a single board when it is detected that the service chip register value of the single board is abnormal; otherwise, it is determined that the service of the single board is normal. In addition, the detection may be performed in a periodic cycle way, and the periodic cycle may be flexibly set by a user.

Optionally, detecting an under-voltage warning may be performed by detecting whether there is an under-voltage indication signal exists in the power panel, for example, by detecting whether there is an under-voltage indication signal exists in the power panel in a periodic cycle way, or sending the under-voltage indication signal to a functional unit for under-voltage warning detection, so as to determine that there is under-voltage warning exists in the power panel.

Optionally, in order to optimize the flow, an improved method for detecting whether there is an under-voltage warning in the power panel and for detecting whether the current voltage of the power panel is normal, is also proposed in the present embodiment. For example, when it is detected that there is a service exception a single board, the method proceeds to detected whether an under-voltage warning exists in the power panel; and when an under-voltage warning is detected in the power panel, the method proceeds to detect whether the current voltage of the power panel is normal.

According to an embodiment of the present disclosure, it is further provided with a power fail protection device for implementing the power fail protection method described above. The detailed description of the method embodiment will be omitted here. In addition, the term "module" as used herein may indicate a combination of software and/or hardware for implementing a predetermined function. Although the device described in the following embodiments may be preferably implemented as software, the implementation of hardware, or a combination of software and hardware, is also possible and can be envisioned.

Figure 2 illustrates a structural diagram of a power fail protection device according to an embodiment of the present disclosure. As shown in Figure 2, the device comprises: a first detection module 22, a second detection module 24, a third detection module 26 and a restart module 28, wherein,
the first detection module 22 is configured to detect whether there is a service exception in a service-carrying single board;
the second detection module 24 is configured to detect whether an under-voltage warning exists in a power panel;
the third detection module 26 is configured to detect whether a current voltage of the power panel is normal; and
the restart module 28 is coupled to the first detection module 22, the second detection module 24, the third detection module 26 and the restart module 28, respectively, and configured to restart the single board in case that there is a service exception in the single board, an under-voltage warning exists in the power panel and the current voltage of the power panel is normal, in order to reconfigure the single board.

Optionally, the first detection module 22 is further configured to determine whether there is a service exception in the single board by detecting whether a service chip register value of the single board is abnormal in a periodic cycle way.

Optionally, the second detection module 24 is further configured to determine whether an under-voltage warning exists in the power panel by detecting whether an under-voltage indication signal exists in the power panel in a periodic cycle way.

Optionally, the second detection module 24 is further configured to detect whether an under-voltage warning exists in the power panel when it is detected that there is a service exception in the single board; and the third detection module 26 is further configured to detect whether the current voltage of the power panel is normal when it is detected that there is a service exception in a service-carrying single board.

According to an embodiment of the present disclosure, it is further provided with a power fail protection system disposed on a single board, the single board comprising: a first detection module configured to detect whether there is a service exception in a service-carrying single board; a second detection module configured to detect whether an under-voltage warning exists in a power panel; a third detection module configured to detect whether a current voltage of the power panel is normal; and a restart module configured to restart the single board in case that there is a service exception in the single board, an under-voltage warning exists in the power panel and the current voltage of the power panel is normal, in order to reconfigure the single board.

According to an embodiment of the present disclosure, it is further provided with a power fail protection system disposed on a plurality of single boards, wherein,
a first single board of the plurality of single boards comprises: a first detection module 22 configured to detect whether there is a service exception in the first single board which is carrying service; and a restart module 28 configured to restart the first single board in case that there is a service exception in the first single board, an under-voltage warning exists in the power panel and a current voltage of the power panel is normal, in order to reconfigure the single board; and
a second single board of the plurality of single boards comprises: a second detection module 24 configured to detect whether an under-voltage warning exists in the power panel; a third detection module 26 configured to detect whether the current voltage of the power panel is normal.

The present disclosure will now be described with reference to alternative embodiments.

In an alternative embodiment, a power fail protection method and system for a communication device is provided. In the present embodiment, a power fail protection unit is added, which can be implemented in hardware or software. With respect to a device that is already shipped to a customer, according to the method provided in the present alternative embodiment, the power fail protection unit can be added by modifying the software embedded in the device, without any hardware change or replacement. According to the solution provided in the present embodiment, by means of software modification, the problem of constant service interruptions due to the fact when more than two power supply modules are used for powering a single board, configurations of service chip (or chips) of the single board is lost when power fail occurs, and when the power supply restores, the service chip (or chips) cannot be reconfigured, can be solved.

In order to solve the problem of constant service interruptions when return to normal power supply after power fail event due to the fact that when more than two power supply modules are used for powering a single board, the output off threshold of each power module is different from each other, a method and system for automatically detecting and solving such an abnormal condition. The system comprises:

A service exception detection unit, configured to detect a service chip register in a periodic cycle way, and send a service exception warning to an under-voltage detection unit when it is detected that the service chip register value is abnormal;

The under-voltage detection unit, configured to detect an under-voltage indication signal exists in the power panel sent from a power panel in a periodic cycle way. If an under-voltage indication signal from the power panel is detected, there are two possibilities: one possibility is the current voltage is normal and at the same time a service exception warning is detected, and in this case, each service single board is reset by corresponding reset operations and restarted, and service chips are reconfigured, so as to avoid constant service interruptions; and the other possibility is the current voltage is under-voltage, and in this case, not any operation is performed.

In actual applications, if the solution of the present embodiment is implemented in hardware, the service exception detection unit and the under-voltage detection unit may be integrated in one power fail protection module, and embedded in the service carrying single board. If the solution of the present embodiment is implemented in software, either of the service exception detection unit and the under-voltage detection unit may be implemented in the software of the service carrying single board.

In summary, there are the following possibilities in practical applications:
1. hardware implementation, in which the power fail protection module is embedded in the service carrying single board;
2. both of the service exception detection unit and the under-voltage detection unit are implemented in the software of the service carrying single board;
3. the service exception detection unit is implemented in the software of the service carrying single board, and the under-voltage detection unit is implemented in software in another single board.

According to the above-mentioned solution of the present alternative embodiment, when it returns to a normal voltage, a service exception warning is sent by a service exception detection unit, and the under-voltage detection unit detects a service exception warning in the case of a normal voltage, corresponding service carrying single board is reset by corresponding reset operations and restarted, the service chips are reconfigured, so as to avoid service interruptions.

The present alternative embodiment will now be described with reference to the drawings.

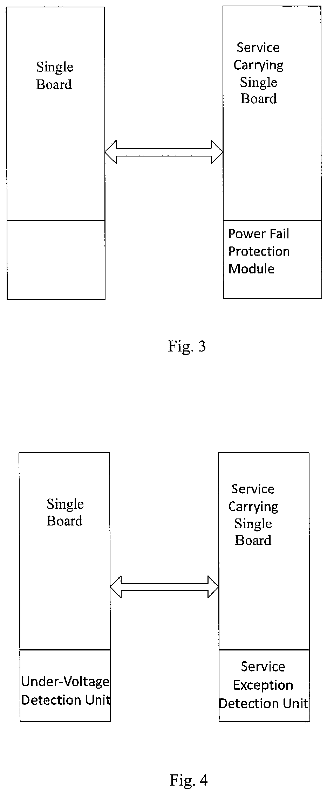

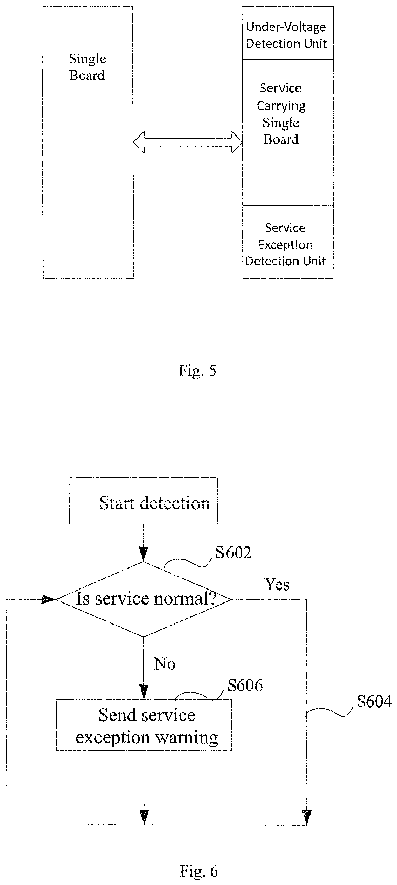

The solution provided in this alternative embodiment may be implemented in hardware, as shown in Fig. 3; or may be implemented in software, as shown in Fig. 4 and Fig.5.

Figure 6 is a flow chart of detection operations performed a service exception detection unit according to an alternative embodiment of the present disclosure. As shown in Figure 6, the service exception detection operations comprises the following steps:
Step S602, detecting whether the service is normal or not;
Step S604, if yes, returning to step S602 without performing any operation;
Step S606, if not, sending service exception warning to the under-voltage detection unit; and then returning to step S602.

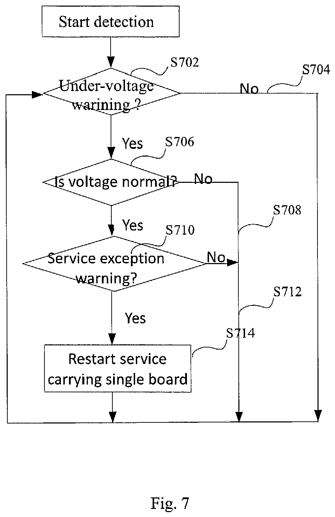

Figure 7 illustrates a flow chart of under-voltage exception detection operations according to an alternative embodiment of the present disclosure. As shown in Fig.7, the under-voltage exception detection operations comprises the following steps:
Step S702, detecting whether there is an under-voltage warning, and determining whether the voltage is normal;
Step S704, if there is not any under-voltage warning, returning to step S702 to wait for the next detection, without performing any operation;
Step S706, if there is an under-voltage warning, determining whether the voltage is normal;
Step S708, if the voltage is abnormal, returning to step S702 to wait for the next detection, without any operation;
Step S710, if the voltage is normal, detecting whether there is a service exception warning;
Step S712, if there is not any service exception warning, returning to step S702 to wait for the next detection, without any operation;
Step S714, if there is a service exception warning, resetting the service carrying single board and returning to step S702 to wait for the next detection.

It can be seen that in the above described alternative embodiments of the present disclosure, with only two detection units needed to be added, automatic service exception can be detected quickly after under-voltage occurs, by resetting and reconfiguring the service chips after they return to the normal voltage, so as to avoid constant service interruptions.

In the embodiments of the present disclosure, it is also disclosed a computer program including program instructions which cause the computer to perform any of the above power fail protection methods when the program instructions are executed by a computer.

In the embodiments of the present disclosure, it is also disclosed a carrier carrying the above described computer program.

In summary, according to the above described embodiments and alternative embodiments of the present disclosure, a service exception detection unit is configured to detect a service chip register value in a periodic cycle way and sending a service exception warning to an under-voltage detection unit when it is detected that the service chip register value is abnormal; and a under-voltage detection unit is configured to detect an under-voltage indication signal sent from the power panel in a periodic cycle way, if the under-voltage indication signal sent from the power panel is detected and the current voltage is normal, and at the same time a service exception warning is detected, then each service single board is reset by corresponding reset operations, each service single board is restarted, and service chips are reconfigured. In this way, the problem of constant service interruptions due to the fact that a power supply module powering a central processing unit of the service-carrying single board does not turn off the output, while output from a power supply module for service chips is turned off can be solved, and also, constant interruptions of the single board service can be avoided.

Obviously, those skilled in the art will understand that the above-described modules or steps of the present disclosure may be implemented by a general purpose computing device which may be concentrated on a single computing device or distributed over a network of a plurality of computing devices. Alternatively, the above-described modules or steps may be implemented as programs executable by the computing device so that they may be stored in a storage device and executed by a computing device, and in some cases, they may be executed as steps in a different order from that is shown or described herein, or they may be made into integrated circuit modules, respectively, or alternatively, a part of modules or steps may be made into single integrated circuit modules. Thus, the present disclosure is not limited to any particular combination of hardware and software.

The above description is merely illustrative of the present disclosure and is not intended to limit the present disclosure in any way. Various changes and modifications may be made based on the present disclosure by those skilled in the art. Any modifications, equivalent substitutions, improvements, and the like within the aspects and principles of the present disclosure are intended to be included within the protection scope of the present disclosure.

### INDUSTRIAL UTILITY

According to the technical solution of the present disclosure, constant service interruptions due to the fact that a power supply module powering a central processing unit of the service-carrying single board does not turn off the output, while output from a power supply module for service chips is turned off can be solved, and also, constant interruptions of the single board service can be avoided by the following steps: detecting whether there is a service exception in the service carrying single board; detecting whether the current voltage of the power panel is normal; in case that there is a service exception in the single board and there is an under-voltage warning in the power panel and the current voltage of the power panel is normal, restarting the single board so as to reconfigure the single board. Therefore, the present disclosure has a strong industrial applicability.

## Claims

1. A power fail protection method, comprising:
detecting whether there is a service exception in a service-carrying single board;
detecting whether an under-voltage warning exists in a power panel;
detecting whether a current voltage of the power panel is normal; and
restarting the single board in case that there is a service exception in the single board, an under-voltage warning exists in the power panel and the current voltage of the power panel is normal, in order to reconfigure the single board.

2. The power fail protection method according to claim 1, wherein detecting whether there is a service exception in a service-carrying single board comprises:
determining whether there is a service exception in the single board by detecting whether a service chip register value of the single board is abnormal in a periodic cycle way.

3. The power fail protection method according to claim 1, wherein detecting whether an under-voltage warning exists in a power panel comprises:
determining whether there is an under-voltage warning exists in the power panel by detecting whether an under-voltage indication signal exists in the power panel in a periodic cycle way.

4. A power fail protection device comprising a first detection module, a second detection module, a third detection module and a restart module, wherein:
the first detection module is configured to detect whether there is a service exception in a service-carrying single board;
the second detection module is configured to detect whether an under-voltage warning exists in a power panel;
the third detection module is configured to detect whether a current voltage of the power panel is normal; and
the restart module is configured to restart the single board in case that there is a service exception in the single board, an under-voltage warning exists in the power panel and the current voltage of the power panel is normal, in order to reconfigure the single board.

5. The power fail protection device according to claim 4, wherein the first detection module is configured to detect whether there is a service exception in a service-carrying single board by way of:
determining whether there is a service exception in the single board by detecting whether a service chip register value of the single board is abnormal in a periodic cycle way.

6. The power fail protection device according to claim 4, wherein the second detection module is configured to detect whether an under-voltage warning exists in a power panel by way of:
determining whether there is an under-voltage warning exists in the power panel by detecting whether an under-voltage indication signal exists in the power panel in a periodic cycle way.

7. The power fail protection device according to any one of claims 4 to 6, wherein,
the first detection module is further configured to notify the second detection module to detect whether an under-voltage warning exists in the power panel when it is detected that there is a service exception in a service-carrying single board;
the second detection module is further configured to, in response to the notification from the first detection module, detect whether an under-voltage warning exists in the power panel, and notify the third detection module to detect whether the current voltage of the power panel is normal when it is detected that an under-voltage warning exists in the power panel; and
the third detection module is further configured to, in response to the notification from the second detection module, detect whether the current voltage of the power panel is normal.

8. A single board, comprising the power fail protection device according to any one of claims 4 to 7.

9. A computer program comprising program instructions that cause the computer to perform a power fail protection method as claimed in any one of claims 1 to 3 when the program instructions are executed by a computer.

10. A carrier carrying a computer program as claimed in claim 9.
